# EUROPEAN PATENT SPECIFICATION

(11) **EP 0 309 475 B1**
(45) Date of publication and mention of the grant of the patent: **29.12.1993**
(21) Application number: 87904045.9
(22) Date of filing: 04.06.1987
(51) Int. Cl.: B32B 27/04, C08G 8/10, C09J 161/10

(54) **PROCESS FOR THE PREPARATION OF A PHENOL-BASED RESIN FOR THE PRODUCTION OF LAMINATES**
VERFAHREN ZUR HERSTELLUNG VON EINEM AUF PHENOL BASIERTEM HARZ FÜR DIE HERSTELLUNG VON LAMINATEN
PROCEDE DE PREPARATION D'UNE RESINE A BASE DE PHENOL POUR LA PRODUCTION DE LAMINES

(30) Priority: 12.06.1986 FI 862511
(43) Date of publication of application: 05.04.1989
(73) Proprietor: Neste Resins Oy, SF-49401 Hamina (FI)
(72) Inventor: PIRHONEN, Ilpo, SF-49400 Hamina (FI); HIETANEN, Eero, SF-49400 Hamina (FI)
(74) Representative: Reinhard, Horst, Dr.
(86) International application number: FI8700076
(87) International publication number: WO8707560

(56) References cited:
- EP-A- 217 370
- DD-A- 127 209
- DE-C- 2 914 315
- GB-A- 1 350 625
- GB-A- 2 004 901
- GB-A- 2 181 442
- JP-A- 5 692 927
- US-A- 2 424 787
- US-A- 2 819 251
- Chemical Abstracts, vol. 91 (1979), abstract No 6710g, JP 79 26860
- Chemical Abstracts, vol. 96 (1980), abstract No 86423g, JP 81 147 812
- Chemical Abstracts, vol. 93 (1980), abstract No 115 436j, JP8056149
- Chemical Abstracts, vol. 89 (1978), abstract No 130 368z, JP 78 56291
- Journal of Applied Polymer Science, vol. 30 (1985), A Fukuda - K Hasegawa "The Curing Behaviour of Resol" p 3943-3952
- D F Gould, Phenolic Resins, Reinhold, New York, 1959 pp 29-31

## Description

The present invention relates to a process for the preparation of a rapid-curing thermosetting plastic resin.

Short pressing times have become necessary as a result of the introduction and development of continuous-action laminate presses. Likewise, short pressing times can be applied when pressing film coatings e.g. with a so-called rapid-cycle process or when using pressing temperatures even lower than earlier for the types of boards, or structures that do not tolerate high pressing temperatures.

Traditionally, so-called high-pressure laminates have been manufactured from phenolic resin impregnated base papers and melamine resin impregnated decor or facing papers by compressing over a long pressing time (circa 30 min) at high pressures (7 to 10 MPa) at a temperature of 120 to 160°C by means of multi-die presses.

As for continuous-action lamination, the traditional phenolic resins used for a laminate body section are too slow. In continuous-action lamination, papers impregnated with melamine-based resins have been used for the body section. These have achieved a sufficient curing rate but a drawback is the high price and the requirement of traditional high-pressure laminate standards about the use of a phenolic resin in the body section.

A few patent applications have been published about fast phenol-based resins that are suitable for continuous-action pressing and useable for the impregnation of a body section, wherein the mixture of a traditional phenolic resin and a traditional melamine resin is cured in the presence of acid-delivering curing agents or in a corresponding system there is additionally used a cross-linking acrylic resin or the curing of a phenolic resin has been accelerated by the addition of a resorcinol-based resin or some of the phenol has been replaced with alkyl phenol.

DE-C-29 14 315 discloses an alkali or earth alkali metal hydroxide catalyzed phenol formaldehyde resin where the reaction mixture has been heated up to a refraction index of 1.466 to 1.473, at a temperature of 60 - 80°C NH₄ salt has been added in 50 to 100 % stoichiometric amount in view of the catalyst and the further condensation is carried out neutralized at 60 - 85°C until the sample has been divided completely into two phases, i.e. the resin phase and the aqueous phase. In the method according to this invention the condensation takes place in alkaline pH. No phase formation occurs and, therefore, there is no need to replace water or add any solvent.

GB-A-20 04 901 describes a phenol-formaldehyde resin having a molar ratio of HCHO : phenol = 3 - 6 : 1 and utilizing as alkali catalyst Na-, K- or Li-oxide or tert. amine. Mg has not been mentioned at any state. The neutralization with acid results in precipitation.

JP 54-26860 discloses a phenol-formaldehyde resin for electrically protected paper laminates.

The addition of Mg(OH)₂ accelerates the curing of triethylamine catalyzed resins. This is also achieved with the addition of any alkalic catalyst of a known phenol formaldehyde resin, even the addition of the triethyl amine itself would act as indicated above. The Mg compounds have been used as being especially suitable for insulation purposes due to poor solubility. Contrary to this disclosure the invention states that the accelerating effect is expressly achieved only by neutralization of the Mg compound containing phenolformaldehyde.

JP-A-53-56291 discloses phenol modified melamine resin for the use in impregnating paper. The HCHO : phenol ratio of the resin is 8:1 and the catalyst is MgCO₃, condensed at 85°C for 90 minutes, then melamine is added and stirred at 90°C for 60 minutes. According to the invention the HCHO : phenol ratio is lower and the method is carried out differently as outlined above.

EP-A-217 370 discloses the manufacture and use of phenolic molding compositions. According to example 1 the commercial resin used has a pH of 8. To said resin magnesium hydroxide and phenol sulfonic acid have been added in a molar ratio of 0.62 : 0.14, i.e. about 4.1 : 1. Contrary to this disclosure the invention is directed to a magnesium base containing phenolformaldehyde resin which is neutralized to a pH of 7.5 - 5.

JP-A-56-92927 describes phenolic resins intended for molding compositions. This document teaches the use of higher amounts of Mg base (1 - 10 parts by weight of the resin solution) than in the present application. Furthermore, the amount of added acid relative to the amount of MG base is so small, that the pH will not correspond to that used in this invention.

US-A-2 424 787 discloses an alkaline phenol formaldehyde resin which in addition to fillers also contains MgO (1-15 weight-%). This amount corresponds to the amount of Mg base added in JP-A-56-92927. When such an amount of Mg base is added to an already base catalyzed phenol resin, the pH will reach values higher than 7,5. Furthermore, US-A-2 424 787 is operating on a pH range different from that of this invention.

D.F. Gould, Phenolic Resins. Reinhold-New York. pp. 29/-31, 1959 is a review of phenol resins. According to Table 3.2. over common properties of phenol resin resoles, the curing time at 150° C varies from 30 to 720 seconds when the dry matter content of the resin is 55-75 % and the pH is 6-10. Features that typically affect the curing time are dry matter content and pH of the resin (= relative base amount), when a base catalyzed resole type phenol resin is concerned.

By utilizing a sufficiently greater amount of base catalysts, whereby the pH of the resin solution is close to 10, a curing time of 30-60 seconds at 150° C can easily be reached, but such resins if used for the purposes the present invention is intended for, will cause compatibility problems e.g. with the melamine resin and corrosion problems, as mentioned in the specification of this application. On the other hand, phenol resins catalyzed with ammonia or otherwise small amounts of a base, and having a neutral or close to neutral pH, may cure as slow as in about 720 seconds as mentioned in the table.

The resin prepared according to this invention in a "close to neutral" pH, however, will cure in 25-40 seconds at 150° C.

In the table of this document a typical dry matter content of the phenol formaldehyde resin is 55-75 %. We may assume that in such general summary table the shortest curing time is reached by a dry matter content of 75 % and pH=10. In the resin of this invention the dry matter content is normally 47% (examples 1-3).

Fukuda et al. J. Appl. Poly. Sci., 30 (1985) reveals that among the tested alkali and earth alkali metal hydroxide catalysts, Mg (OH)₂ gives the poorest curing time. Earth alkali hydroxide is said to increase the curing time of resoles due to increasing ion radius of the catalyst. The ion radius of Mg is quite small, thus resulting in the slowest curing resin if Mg is used as a catalyst. Contrary to that disclosure the invention decreases the curing time by combining the Mg catalyzation and the neutralization to obtain a resin that is very fast curing.

DD-A-127 209 discloses a phenol-formaldehyde-impregnation resin, which is particularly suitable for electrical insulation plates and characterized in that: phenol : HCHO : MgO = 1 : 1.07 - 1.09 : 0.013 (this application : 1:1.2 - 3.0 : 0.01 - 0.3).
- condensation takes place at 80 - 85°C (precondensation at 100°C for 10 - 15 minutes)
- distallation at 60 - 65°C
- dilution with a low boiling alcohol.

Thus a very slow resin is obtained: gel time 320 s at 150°C, while in the invention it is typically 26 - 39 s.

A drawback of such processes is often an insufficient curing rate and/or a price much higher than that of traditional phenolic resins.

It has been necessary to develop a process for the preparation of a fast-curing phenol formaldehyde resin, whereby an impregnated film can be hot-pressed to the surface of a bulding board (ply-wood, particle board or the like) in 3 to 4 minutes in otherwise similar conditions or which can be pressed at 110 to 120°C in otherwise similar conditions or which can be pressed at 170°C within 40 to 60 seconds.

The main object of this invention is to provide a process for the preparation of a fast- curing phenolic resin, which product is suitable for the continuous-action production of laminates, useable in the body section and which is highly suitable for pressing together with a melamine coating film.

This object is fulfilled by a process for the preparation of a rapid-curing thermosetting plastic resin which is a Mg-base containing phenol formaldehyde resin or a mixture of the above and an amino formaldehyde resin, characterized in that following a condensation in an alkaline pH range, said Mg-base being either used as a catalyst in said condensation or being added thereafter, the pH of the resin is adjusted with an acid or acid-delivering compound to a pH-range of 7.5 to 5, the molar ratio of the magnesium base and phenol being from 0.01 to 0.3, and the formaldehyde/phenol molar ratio being from 1.2 to 3.0.

The amount of magnesium compound can be varied as expressed in moles of phenol from 0.01 to 0.3. The most preferred molar ratios have been found to be from 0.05 to 0.1.

The formaline and phenol molar ratio of such resin may vary from 1.2 to 3.0. However, 1.7 to 2.0 has been found optimal.

A special feature found in magnesium-catalysed phenolic resins is that their curing rate increaes significantly when proceeding from the traditional low cure pH-ranges (pH appr. 8 to 11) to the neutral pH-range (pH circa 7). In contrast, the traditional NaOH-, KOH-, K₂CO₃-, Na₂CO₃-, 3a(OH)₂- etc. catalyzed phenolic resins decrease their curing rate when approaching the neutral pH-range. The curing rate of these resins only begins to increase significantly in the strongly acidic pH-range (pH circa 3 or below).

The neutral or slightly acidic pH-range in terms of the rapid curing of a phenolic resin is preferable in the sense that a melamine resin, possibly admixed in the impregnation of the body section, advantageously cures within the same pH-range. Also a melamine-formaldehyde resin used for the impregnation of a coating or decor film cures optimally in the same pH-conditions.

When producing a laminate by using in the body section a phenolic resin curing within an alkaline range and in the surface layer a melamine resin curing within an acidic range, there will easily occur problems in the boundary surface between the layers; delamination, bubbling, incomplete curing etc.

When impregnating the body section by using a mixture of traditional phenol formaldehyde and melamine formaldehyde resins and by curing it in an alkaline, neutral or slightly acidic pH-range, there easily occurs incomplete curing of either one of the resin components over short pressing times, nor does the obtained laminate fulfil the requirements in all respects.

The manner of increasing the curing rate of phenolic resin according to the invention is also preferable in the respect that magnesium ions have been found to increase also the curing rate of melamine resin and is therefore advantageous when used together with melamine formaldehyde resin in admixed form or with a melamine resin impregnated coating film in laminated form.

A phenolic resin and a mixture of phenol melamine resins of the invention have been found to have a gelling rate of 25 to 40 at 150°C depending on receptivity and pH, the base papers impregnated with a similar resin or resin system being pressable into a laminate by using a continuous-action press at an operating speed of 10 to 15 m/min, a temperature of 160 to 180°C, and a pressure of 2 to 5 MPa.

A paper impregnated with the phenolic resin or the mixture of phenolic and melamine resins produced by the process of the invention can be hot-pressed to the surface of a building board at a temperature of 130°C, at a pressure of 2 MPa in 3 to 4 minutes and at a temperature of 120°C, at a pressure of 2 MPa in 6 to 7 minutes and in so-called rapid-cycle pressing at a temperature of 170°C and a pressure of 2 MPa in 40 to 60 seconds.

The invention will be illustrated in more detail in the following examples.

### Examples

### Example 1

This example describes a resin curing rate in different pH-conditions.

A phenol formaldehyde resin was prepared with a molar ratio formaldehyde : phenol : Mg²⁺ = 1.8 : 1 : 0.104.
metered into a reactor:

| | |
|---|---|
| phenol 92 % solution | 1 226 kg |
| formaline 40 % | 1 620 kg |
| water | 101 kg |
| Mg(OH)₂ | 73 kg |

The mixture temperature was raised to 85°C and was held there until viscosity had risen, as measured with a 4 mm Din cup at 20°C, to 18 seconds. Thereafter, the condensation was stopped by cooling the resin to 20 to 25°C. Properties of the resin are described by the following analysis values:

| | |
|---|---|
| pH | 8,50 |
| viscosity Brookfield 20° MPa s | 49 |
| specific weight 20° | 1,147 |
| dry matter content 1 g/1,5 h/150°C % | 47,3 |
| water tolerance 20° g/g | 0,37 |
| curing time 130°C s | 74 |

The resin pH was adjusted with a 25 % hydrochloric acid and curing rate was measured. The results are set forth in the following table:

| pH | Curing time 150°C, s |
|---|---|
| 8.5 | 74 |
| 8.0 | 57 |
| 7.5 | 29 |
| 6.5 | 28 |
| 6,0 | 26 |

### Example 2

A phenol formaldehyde resin was prepared with a molar ratio formaldehyde : phenol : Mg²⁺ = 1.8 : 1 : 0,05 by metering into a reactor:

| | |
|---|---|
| phenol 92 % | 1 226 kg |
| formaline 40 % | 1 620 kg |
| water | 101 kg |
| Mg(OH)₂ | 35 kg |

The mixture temperature was raised to 85°C and was held there until viscosity had risen, as measured with a 4 mm Din cup at 20°C, to 18 seconds. Thereafter, the mixture was cooled to 20 to 25°C and 144 g of methanol was added therein.

Some of the mixture was neutralized with a 25 % hydrochloric acid to pH 7.0.

The analysis results of unneutralized and neutralized resin are set forth in the following table:

| | Unneutralized | Neutralized |
|---|---|---|
| pH | 8.20 | 7.50 |
| Viscosity Brookfield 20° MPa s | 80 | 48 |
| Specific weight | 1.143 | 1.145 |
| Dry matter 1 g/1,5 h/150°C | 47.3 | 47.9 |
| Water tolerance | 0.23 | 0.03 |
| Curing time | 81 | 39 |

### Example 3

A phenol formaldehyde resin was prepared at a molar ratio formaldehyde : phenol : mg-base = 1.8 : 1 : 0.05 by metering into a reactor:

| | |
|---|---|
| phenol | 405 kg |
| formaline | 535 kg |
| magnesiumoxide | 8 kg |

The mixture was heated to the temperature of 85°C for 2 hours to achieve a suitable viscosity level and cooled to 20°C.

Some of the water was replaced, a solvent, in this case methanol, was added and metered 50 kg.

Prior to impregnating the laminate base paper, the resin pH was adjusted to pH 7.0 with a 50 % paratoluene sulphonic acid.

Properties of the resin are set forth in the following table:

| | |
|---|---|
| pH | 7.1 |
| Viscosity | 35 MPa s |
| Specific weight 20° | 1.141 |
| Dry matter content 1 g/1,5 h/150°C | 47.2 |
| Water tolerance g/g | 0.59 |
| Curing time 150°C s | 52 |

Depending on a desired type of laminate there were still added necessary post-forming additives and/or release agents.

The resin was used to impregnate a Kraft paper having 160 g/m² to the amount of resin of 35 % in a conventional manner and the thus impregnated paper was used to produce laminate in a continuous action together with a coating film impregnated with a suitable melamine resin. In the production of laminate, temperature was 160°C, pressure load was 3.5 MPa, and production line rate was 6 m/min. The laminate fulfilled the general quality requirements of post-forming high-pressure laminates.

### Example 4

A resin according to example 3 was prepared and per 90 parts by weight was mixed 10 parts by weight of a post-forming quality melamine formaldehyde resin having the same dry matter (melamine resin was Melurex 5002 from Priha Oy).

The resin mixture had a pH of 7.2 and its curing rate was 40 s/150°C.

The resin mixture was used to impregnate a Kraft paper having 160 g/m² to the amount of resin of 35 % in a conventional manner and the thus impregnated paper was used to produce laminate in a continuous action together with a coating film impregnated with a suitable melamine resin. The laminate production conditions were: temperature 160°C, pressure load 3.5 MPa and rate 10 m/min. The laminate fulfilled the general quality requirements ofpost-forming high-pressure laminates.

### Example 5

A resin according to example 3 was prepared and per 85 parts by weight was mixed 15 parts by weight of a post-forming quality melamine formaldehyde resin having the same dry matter (melamine resin was Melurex 5002 from Priha Oy).

The resin mixture had a pH of 7.3 and its curing rate was 32 s/150°C.

The resin mixture was used to impregnate a Kraft paper having 160 g/m² to the amount of resin of 40 % in a conventional manner and the thus impregnated paper was used to produce laminate in a continuous action together with a coating film impregnated with a suitable melamine resin. The laminate production conditions were: temperature 160°C, pressure load 3.5 MPa and rate 12 m/min. The laminate fulfilled the general quality requirements of post-forming high-pressure laminates.

### Example 6

A phenol formaldehyde resin according to example 3 was prepared.

Prior to impregnation, colourants and a release agent were added into the resin as necessary.

The resin was used to impregnate a Kraft paper having 42 g/m² in a manner that the total weight was 117 g/m² and residual moisture content was 6 to 8 %.

The film was then pressed in a hot press to the surface of a plywood board at the temperature of 130°C and the pressure of 1.8 MPa in 4 minutes, whereafter the board fulfilled the normal standards.

## Claims

1. A process for the preparation of a rapid-curing thermosetting plastic resin which is a Mg-base containing phenol formaldehyde resin or a mixture of the above and an amino formaldehyde resin,
**characterized in**
that following a condensation in an alkaline pH range, said Mg-base being either used as a catalyst in said condensation or being added thereafter, the pH of the resin is adjusted with an acid or acid-delivering compound to a pH-range of 7.5 to 5, the molar ratio of the magnesium base and phenol being from 0.01 to 0.3, and the formaldehyde/phenol molar ratio being from 1.2 to 3.0.

2. A process for the preparation of the resin in claim 1,
characterized in
that the catalyst used for resin production is a magnesium base.

3. A process for the preparation of the resin in claim 1 or 2,
characterized in
that the formaldehyde/phenol molar ratio is 1.7 to 2.0.

4. A process for the preparation of the resin in claim 1, 2 or 3,
characterized in
that the molar ratio of the magnesium base and phenol is 0.05 to 0.1.

## Patentansprüche

1. Verfahren zur Herstellung eines schnell-härtenden hitzehärtbaren Kunststoffharzes, welches ein eine Mg-Base enthaltendes Phenolformaldehydharz oder eine Mischung aus dem Phenolformaldehydharz und einem Aminoformaldeydharz ist, **dadurch gekennzeichnet,**
daß nach einer Kondensation in einem alkalischen pH-Bereich die Mg-Base entweder als Katalysator in der Kondensation verwendet wird oder sie anschließend hinzugegeben wird, der pH des Harzes mit einer Säure oder einer Säure-liefernden Verbindung auf einen pH-Bereich von 7,5-5 eingestellt wird, das Molverhältnis der Magnesiumbase und des Phenols 0,01 bis 0,3 und das Formaldehyd/Phenol-Molverhältnis 1,2 bis 3,0 beträgt.

2. Verfahren zur Herstellung des Harzes nach Anspruch 1,
dadurch gekennzeichnet,
daß der für die Harzproduktion verwendetet Katalysator eine Magnesiumbase ist.

3. Verfahren zur Herstellung des Harzes nach Anspruch 1 oder 2,
dadurch gekennzeichnet,
daß das Formaldehyd/Phenol-Molverhältnis 1,7 bis 2,0 beträgt.

4. Verfahren zur Herstellung des Harzes nach Anspruch 1, 2 oder 3,
dadurch gekennzeichnet,
daß das Molverhältnis der Magnesiumbase und des Phenols 0,05 bis 0,1 beträgt.

## Revendications

1. Procédé de préparation d'une résine plastique thermodurcissable à durcissement rapide qui est une résine phénol-formaldéhyde contenant une base de magnésium ou un mélange de cette résine et d'une résine aminoformaldéhyde, caractérisé en ce qu'après une condensation dans un domaine de pH alcalin, la base de magnésium étant soit utilisée comme catalyseur dans cette condensation, soit ajoutée ensuite, on ajuste le pH de la résine à un intervalle de valeurs de pH compris entre 7,5 et 5 au moyen d'un composé acide ou fournissant un acide, le rapport molaire de la base de magnésium et du phénol étant compris entre 0,01 et 0,3 et le rapport molaire formaldéhyde/phénol étant compris entre 1,2 et 3,0.

2. Procédé de préparation de résine suivant la revendication 1, caractérisé en ce que le catalyseur utilisé pour la production de la résine est une base de magnésium.

3. Procédé de préparation de résine suivant l'une des revendications 1 et 2, caractérisé en ce que le rapport molaire formaldéhyde/phénol est compris entre 1,7 et 2,0.

4. Procédé de préparation de résine suivant l'une des revendications 1 à 3, caractérisé en ce que le rapport molaire de la base de magnésium et du phénol est compris entre 0,05 et 0,1.
